# EUROPEAN PATENT SPECIFICATION

(11) **EP 4 072 168 B1**
(45) Date of publication and mention of the grant of the patent: **08.05.2024**
(21) Application number: 21212354.1
(22) Date of filing: 03.12.2021
(51) Int. Cl.: H04W 4/02, H04W 4/46

(54) **VEHICLE COMMUNICATION METHOD, APPARATUS, AND VEHICLE**
FAHRZEUGKOMMUNIKATIONSVERFAHREN, VORRICHTUNG, UND FAHRZEUG
PROCÉDÉ DE COMMUNICATION DE VÉHICULE, APPAREIL, ET VÉHICULE

(30) Priority: 07.04.2021 CN 202110374232
(43) Date of publication of application: 12.10.2022
(73) Proprietor: Guangzhou Xiaopeng Motors Technology Co., Ltd., Tianhe District Guangzhou Guangdong (CN)
(72) Inventor: HE, Zenglong, Guangzhou (CN)
(74) Representative: Rowlands, Stuart Michael

(56) References cited:
- EP-B1- 2 703 873
- DE-A1-102008 007 711
- US-A1- 2007 164 896
- US-A1- 2017 244 444
- US-A1- 2020 280 827

## Description

### Field of Invention

The present disclosure relates to the field of vehicle technologies, and in particular to a vehicle communication method, a vehicle communication apparatus, a communication controller, and a vehicle.

### Background

With the development of science and technology, automobiles are becoming more and more intelligent, and with the continuous improvement of people's life quality, there are more and more vehicles on the road. People can communicate with each other through electronic devices, but there is no good way for multiple moving vehicles to communicate with each other. How to realize better communication between vehicles has therefore become an urgent problem to be solved.

EP2703873A2 relates to a method of providing information about a predetermined external vehicle on a transparent display of an information providing vehicle, the method including: acquiring status information of the external vehicle; determining a display mode for displaying an object corresponding to the external vehicle based on the acquired status information; and displaying the object corresponding to the external vehicle on the transparent display in the determined display mode, wherein the display mode may include an augmented reality mode displaying an image obtained by overlaying a virtual image on an actual image of the external vehicle that is observed through the transparent display, and a map mode displaying the object corresponding to the external vehicle after mapping the object to a map.

US2007/164896 A1 relates to a UWB having a communication function and a radar function. For an obstacle vehicle in front, the distance between two cars is measured using the radar function, and according to this distance, a hazard warning is issued to a driver or a pre-crash operation is carried out. Moreover, by informing its own position to each other between vehicles using the communication function, the distance to a vehicle near to the own vehicle is measured regardless of clutter, and according to this distance, a hazard warning is issued to a driver or a pre-crash operation is carried out. Moreover, the operating frequency and transmission power of a radar are changed based on its own location information, thereby reducing influence to and from other wireless system.

US2017/244444 A1 relates to recursive constellations of Ultra-Wide Band ("UWB") transceivers applied to Intra-Vehicle, Inter-Vehicle and Vehicle-to-Infrastructure constellations.

DE 10 2008 007711 A1 relates to a communication method for ad hoc vehicle-to-vehicle communication using an ad hoc radio network through communication systems arranged in a plurality of vehicles. This is done through the following steps: the presence of one or more vehicles with communication systems within range of the ad hoc radio network is checked and, if there are several communication systems, a readiness for communication of the communication systems is queried, that one or more topics are transmitted from each communication system to the other communication systems which there is a willingness to communicate, and that if topics match, information is exchanged using communication units in the vehicles.

### Summary of Invention

In view of the foregoing problem, embodiments of the present disclosure provide a vehicle communication method, a vehicle communication apparatus, and a vehicle to solve the above technical problem.

The embodiments of the present disclosure are implemented using the following technical solutions.

In a first aspect, some embodiments of the present disclosure provide a vehicle communication method as set out in claim 1.

In a second aspect, some embodiments of the present disclosure provide another vehicle communication method as set out in claim 7.

In a third aspect, some embodiments of the present disclosure provide a vehicle communication apparatus as set out in claim 8.

In a fourth aspect, some embodiments of the present disclosure provide another vehicle communication apparatus as set out in claim 9.

In a fifth aspect, some embodiments of the present disclosure provide a vehicle comprising a communication controller as set out in claim 10.

In a sixth aspect, an embodiment of the present disclosure provides a computer-readable storage medium as set out in claim 11.

With the vehicle communication methods, the vehicle communication apparatuses, the communication controller, and the vehicle provided in the embodiments of the present disclosure, communication with an ultra-wideband communication system of a vehicle within a preset range can be realized in a simple and effective manner. Specifically, it is detected whether a target vehicle equipped with an ultra-wideband communication system exists within a preset range; if the target vehicle exists, it is determined whether a communication connection request from a first user to a first vehicle is received, the first user being in the first vehicle; if the communication connection request is received, the communication connection request is sent to the target vehicle; and when a communication permission request sent by the target vehicle is received, a communication connection is established between the first vehicle and the target vehicle. In the present disclosure, when it is determined that target vehicles each equipped with an ultra-wideband communication system exist within the preset range, communication connections may be established with different target vehicles depending on user's needs. The establishment of communication connections is simple and effective and can realize point-to-point communication with vehicles.

These and other aspects of the present disclosure will become clearer and understandable in the description of the following embodiments.

### Brief Description of Drawings

In order to clearly illustrate the technical solutions of the present disclosure, drawings for embodiments of the invention will be briefly introduced below. Obviously, the drawings in the following description just illustrate some embodiments of the present disclosure. For those skilled in the art, other drawings can be obtained based on these drawings without paying any creative work.
Fig. 1 shows a schematic diagram of an application environment provided by an embodiment of the present disclosure.
Fig. 2 shows a schematic flowchart of a vehicle communication method provided by an embodiment of the present disclosure.
Fig. 3 shows an example of installation of ultra-wideband antennas in a vehicle communication method provided by an embodiment of the present disclosure.
Fig. 4 shows a diagram of an example where a target vehicle is displayed on a display of a first vehicle in a vehicle communication method provided by an embodiment of the present disclosure.
Fig. 5 shows a schematic flowchart of a vehicle communication method provided by another embodiment of the present disclosure.
Fig. 6 shows a schematic diagram of sending of a communication means extension request in a vehicle communication method provided by another embodiment of the present disclosure.
Fig. 7 shows a schematic flowchart of a vehicle communication method provided by a further embodiment of the present disclosure.
Fig. 8 shows a schematic flowchart of a vehicle communication method provided by further another embodiment of the present disclosure.
Fig. 9 shows a block diagram of a vehicle communication apparatus provided by an embodiment of the present disclosure.
Fig. 10 shows a block diagram of a vehicle communication apparatus provided by an embodiment of the present disclosure.
Fig. 11 shows a block diagram of a communication controller provided by an embodiment of the present disclosure.
Fig. 12 shows a schematic structural diagram of a vehicle provided by an embodiment of the present disclosure.
Fig. 13 shows a block diagram of a computer-readable storage medium provided by an embodiment of the present disclosure.

### Detailed Description

In order to enable those skilled in the art to better understand solutions of the present disclosure, the technical solutions in embodiments of the present disclosure will be described clearly and completely below in combination with accompanying drawings in the embodiments of the present disclosure..

With the development of science and technology, automobiles are becoming more and more intelligent, and with the continuous improvement of people's life quality, there are more and more vehicles on the road. People can communicate with each other through electronic devices, but there is no good way for multiple moving vehicles to communicate with each other. At present, vehicle-to-vehicle communication is usually realized through vehicle lights, horn honking, etc. However, drivers sometimes do not learn vehicle light signalling when learning to drive, and horn honking are not allowed in some places in cities.

In addition, although existing technologies can realize communications between drivers through vehicle intercoms, but existing vehicle intercoms usually need to be approved by the Radio Administration Bureau before they can be used. Besides, users need to obtain a radio license before they can use a vehicle intercom. Furthermore, a vehicle intercom is a broadcast-type communication tool, which may not be suitable for communication with a specific vehicle. Vehicle drivers are usually strangers to each other and it is impossible for a current driver to obtain a communication channel of another vehicle driven by a stranger. Communication between such vehicles is therefore impossible. In summary, the existing vehicle communication methods, whether they are vehicle lights, horn honking, or car intercoms, are not suitable for point-to-point communication, thus delivering bad user experience.

In order to solve the above technical problems, the applicant, after long-term research, proposes a vehicle communication method, a vehicle communication apparatus, a communication controller, and a vehicle in the embodiments of the present disclosure. The vehicle communication method can realize a communication connection with an ultra-wideband (UWB) communication system of a vehicle within a preset range in a simple and effective manner. Specifically, it is detected whether a target vehicle equipped with an ultra-wideband communication system exists within a preset range; if the target vehicle exists, it is determined whether a communication connection request from a first user to a first vehicle is received, the first user being in the first vehicle; if the communication connection request is received, the communication connection request is sent to the target vehicle; and when a communication permission request sent by the target vehicle is received, a communication connection is established between the first vehicle and the target vehicle. According to the present disclosure, when it is determined that target vehicles equipped with an ultra-wideband communication systems exist within a preset range, communication connections can be established with different target vehicles based on needs of a user. The establishment of the communication connections is simple and effective and can realize point-to-point communication with vehicles.

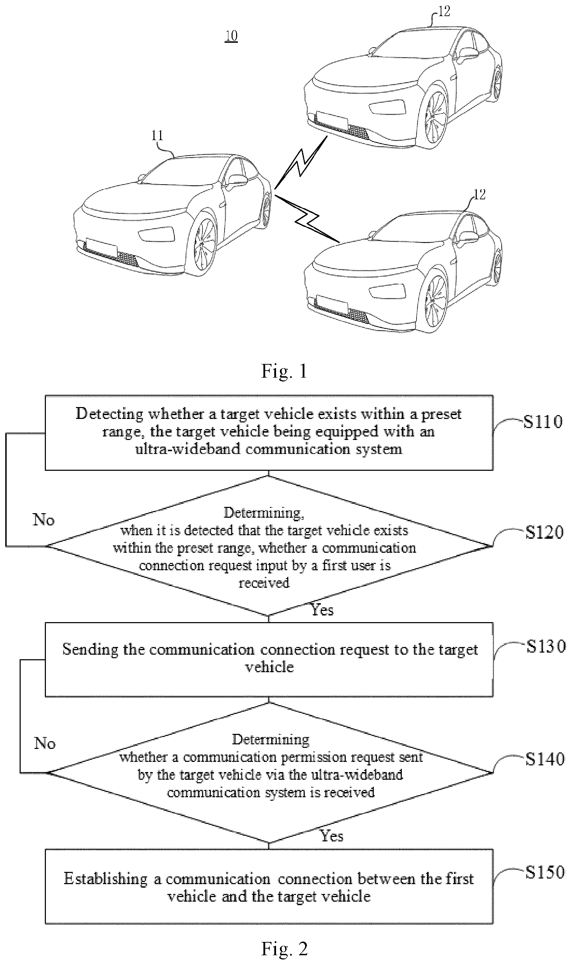

Referring to Fig. 1, a vehicle control method provided by an embodiment of the present disclosure may be applied to a vehicle communication system 10. The vehicle communication system 10 may include a first vehicle 11 and a plurality of target vehicles 12. The first vehicle 11 may be in communication connections with the target vehicles 12. That is, the first vehicle 11 may send data to the target vehicles 12 and may also receive data sent by the target vehicles 12. Alternatively, provided may be one or more target vehicles 12.

As shown in Fig. 2, Fig. 2 schematically shows a flowchart of a vehicle communication method provided by an embodiment of the present disclosure. The method may include the following steps S110 to S150.

In step S110, it is detected whether a target vehicle exists within a preset range, the target vehicle being equipped with an ultra-wideband communication system.

The vehicle communication method provided by the present embodiment may be applied to a first vehicle which may be provided with a first ultra-wideband communication system. The first vehicle may detect whether a target vehicle exists within a preset range, the target vehicle being equipped with a second ultra-wideband communication system. The first ultra-wideband communication system and the second ultra-wideband communication system have a same structure. Ultra-wideband can be used to perform high-precision positioning and high-speed data transmission. Therefore, in the present embodiment, the first ultra-wideband communication system is used to realize instant communication with specific traffic in a traffic flow.

In some embodiments, the first vehicle may detect whether a target vehicle exists within the preset range every preset time period, and the first vehicle may also monitor its speed. When it is determined that the speed of the first vehicle is greater than a specified speed, a detection operation may be initiated. In addition, detecting whether a target vehicle exists within the preset range may also be initiated when a detection instruction input by a first user based on the first vehicle is received.

In the present embodiment, the first ultra-wideband communication system may include a plurality of ultra-wideband antennas which may be installed at different positions of the vehicle. In a specific embodiment, the first vehicle may be provided with at least three ultra-wideband antennas. With these ultra-wideband antennas, the first vehicle may monitor a target vehicle within the preset range. After a target vehicle is detected, a distance between the first vehicle and the target vehicle, a position of the target vehicle relative to the first vehicle, and a speed of the target vehicle may be determined. An ultra-wideband antenna can transmit extremely low-power signals over a wide frequency spectrum, and can achieve data transmission rates of hundreds of Mbit/s to several Gbit/s within a range of about hundreds of meters. In addition, ultra-wideband antennas have many advantages such as strong anti-interference performance, high transmission rates, extremely wide bandwidths, low power consumption, and low transmission power. Therefore, in the present embodiment, an ultra-wideband antenna may be used to transmit data such as texts, audios, videos, etc.

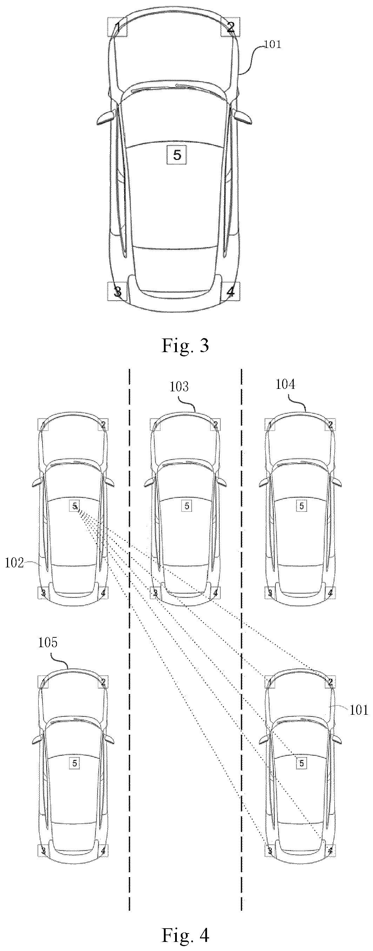

In order to better understand the positions for installing the ultra-wideband antennas, an example of installing the ultra-wideband antennas as shown in Fig. 3 is given in the present embodiment. As can be seen from Fig. 3, a first vehicle 101 may be equipped with a plurality of ultra-wideband antennas. These ultra-wideband antennas may be installed on a left front of the first vehicle 101. For example, an ultra-wideband antenna may be installed at a position labeled 1 in Fig. 3. The first vehicle 101 may also be equipped with an ultra-wideband antenna on a right front thereof. For example, an ultra-wideband antenna may be installed at a position labeled 2 in Fig. 3. The first vehicle 101 may also be equipped with an ultra-wideband antenna on a left rear thereof. For example, an ultra-wideband antenna may be installed at a position labeled 3 in Fig. 3. The first vehicle 101 may also be equipped with an ultra-wideband antenna on a right rear thereof. For example, an ultra-wideband antenna may be installed at a position labeled 4 in Fig. 3. The first vehicle 101 may also be equipped with an ultra-wideband antenna on a middle portion thereof. For example, an ultra-wideband antenna may be installed at a position labeled 5 in Fig. 3.

Alternatively, the first ultra-wideband communication system as shown in Fig. 3 may include five ultra-wideband antennas, which is only an example. The ultra-wideband antenna system may also include three ultra-wideband antennas, seven ultra-wideband antennas, or other numbers of ultra-wideband antennas. The number of the ultra-wideband antennas that are equipped is not specifically limited, and may be selected as practically needed.

In other embodiments, the second ultra-wideband communication system equipped on the target vehicle may include at least one ultra-wideband antenna. Mutual positioning and data transmission may be performed between the second ultra-wideband communication system equipped on the target vehicle and the first ultra-wideband communication system equipped on the first vehicle. It should be noted that, the ultra-wideband communication system, regardless of whether it is the first ultra-wideband antenna system or the second ultra-wideband communication system, may include a main ultra-wideband communication system. With the main ultra-wideband antenna system, a distance between the first vehicle and the target vehicle as well as an orientation of the target vehicle relative to the first vehicle may be accurately determined. In addition, the first vehicle may be used as the target vehicle, and the target vehicle may also be used as the first vehicle. Which one is used as the first vehicle and which is used as the target vehicle are mainly determined based on data actually input by the user.

In other embodiments, the first vehicle may detect whether a target vehicle exists within the preset range, and if it is detected that the target vehicle exists within the preset range, it is determined whether a communication connection request is received from a first user. That is, the method proceeds to step S120. If it is detected that no target vehicle exists within the preset range, detecting whether a target vehicle exists within the preset range is continued.

In the present embodiment, the preset range may be a range of an area with the first vehicle as a center and a preset distance as a radius. That is, the preset range may be a maximum area range of radiation of the ultra-wideband antenna. In addition, the preset range may be different depending on different vehicles. The preset range mainly depends on the performance of the ultra-wideband communication system and may also be related to a manufacturer of the vehicle, or the preset range may also be a range set by the user of the first vehicle based on his/her actual needs. The preset range is not specifically limited herein and may be set based on actual situations. It should be noted that there may be one or more target vehicles within the preset range. That is, when the first vehicle detects that a plurality of target vehicles exist within the preset range, the first vehicle may take all of the plurality of target vehicles as target vehicles simultaneously.

In step S120, when it is detected that the target vehicle exists within the preset range, it is determined whether a communication connection request is received from a first user.

As an alternative, in the case of determining that a target vehicle exists within the preset range, in the present embodiment, it may be further determined whether a communication connection request is received from the first user. The first user may be a user located in the first vehicle. That is, the first user is in the first vehicle, and may be a driver in the first vehicle or a passenger in the first vehicle.

As another alternative, the communication connection request from the first user may be a call connection request. The communication connection request may be a communication connection request input by the first user by touching a central control display of the first vehicle, or a communication connection request input to the first vehicle by the first user via audio input, or a communication connection request input to the first vehicle by the first user by gestures or actions.

In the present embodiment, the first user may input the communication connection request by means of a long tap, a tap, or a swipe. Specifically, the first user may long tap an icon for the target vehicle on the central control display of the first vehicle to input the communication connection request via text input, audio input, or video input, or may tap the icon for the target vehicle on the central control display of the first vehicle to input the communication connection request via text input, audio input, or video input, or may swipe the icon for the target vehicle on the central control display of the first vehicle to input the communication connection request via text input, audio input, or video input, or may input the communication connection request by using a long tap, a tap and a swipe together. Further, in present embodiment, the communication connection request may be input directly via audio input. For example, the user may input audio "please make a call to the vehicle labeled 104", in which case the first user inputs the communication connection request.

In the present embodiment, when it is detected that a target vehicle exists within the preset range, it may also be determined whether there are a plurality of target vehicles. If there are a plurality of target vehicles within the preset range, the first vehicle may determine a position of each of the target vehicles, a direction and a distance of each of the target vehicles relative to the first vehicle, etc., and then display each of the target vehicles on the central control display of the first vehicle based on the acquired information. This makes it convenient for the first user to better monitor movement of each target vehicle and also makes it possible for the first user to directionally communicate with a certain vehicle among the target vehicles.

As an alternative, in displaying the target vehicle on the central control display of the first vehicle, in the present embodiment, the displaying may be realized based on an actual position relationship between the target vehicle and the first vehicle, and in displaying the target vehicle, in the present embodiment, a distance between the target vehicle and the first vehicle, as well as a speed and a specific position of the target vehicle may be displayed. In order that the displaying of the target vehicle in the first vehicle can be understood in a better way, the present embodiment provides an example diagram as shown in Fig. 4. In Fig. 4, the vehicle labeled 101 may be referred to as first vehicle, and the vehicles labeled 102, 103, 104, and 105 can all be referred to as target vehicles.

Specifically, because the vehicle 102, the vehicle 103, the vehicle 104, and the vehicle 105 are all located within the preset range from the first vehicle 101, these vehicles may all be taken as target vehicles. When detecting that these vehicles exist within the preset range, the first vehicle 101 may display these vehicles on the central control display of the first vehicle 101 based on actual positional relationships between these vehicles and the first vehicle. For example, the vehicle 104 in Fig. 4 is actually directly in front of the first vehicle 101; when the vehicle 104 is displayed on the central control display of the first vehicle 101, in the present embodiment, an icon corresponding to the vehicle 104 may be displayed directly in front of an icon corresponding to the first vehicle 101. Similarly, in Fig. 4, the vehicle 105 is actually directly on a left side of the first vehicle 101; when the vehicle 105 is displayed on the central control display of the first vehicle 101, in the present embodiment, an icon corresponding to the vehicle 105 may be displayed directly on a left side of the icon corresponding to the first vehicle 101.

As an alternative, when receiving the communication connection request from the user, the first vehicle may send the communication connection request to the target vehicle. The communication connection request may be triggered by the user by touching one of icons corresponding to the plurality of target vehicles. The vehicle corresponding to this icon is the final target vehicle. For example, the vehicle 102 in Fig. 4 may be the target vehicle selected by the first user through positioning.

In some embodiments, when it is detected that the target vehicle exists within the preset range, the target vehicle may be displayed on the central control display of the first vehicle. During the displaying, the first vehicle may display the target vehicle in the form of a preset icon on the central control display of the first vehicle. The preset icon may be a vehicle icon, or a positioning symbol icon, or an icon corresponding to a cartoon character.

Moreover, in displaying the target vehicle on the central control display of the first vehicle, in the present embodiment, the icon corresponding to the first vehicle may also be displayed on the central control display. The icon corresponding to the first vehicle and the icon corresponding to the target vehicle may be the same or different. When the icon corresponding to the first vehicle and the icon corresponding to the target vehicle are the same, in the present embodiment, the first vehicle and the target vehicle may be distinguished from each other by different colors, or target vehicles may be distinguished from one another by different icons. For example, the icon corresponding to the first vehicle is red, and the icon corresponding to the target vehicle is yellow, and when there is a plurality of target vehicles, in order to distinguish these target vehicles, each of the icons corresponding to the target vehicles may be displayed to have a corresponding number in the present embodiment.

In other embodiments, when it is detected that the target vehicle exists within the preset range, a communication connection request may be sent first to the target vehicle. The communication connection request may be a connection request automatically sent by the vehicle when detecting that the target vehicle exists within the preset range. Specifically, when detecting that the target vehicle exists within the preset range, the first vehicle may first send to the target vehicle the communication connection request which is mainly used to enable a communication connection between the first vehicle and the target vehicle, so that the first vehicle can communicate with the target vehicle. In the case that it is determined that the communication connection between the first vehicle and the target vehicle has been successfully established, it may be further determined whether a communication connection request is received from the first user.

In some embodiments, after receiving the communication connection request from the first user, the first vehicle may send the communication connection request to the target vehicle, so that the target vehicle enables communication connection with the first vehicle based on the communication connection request. That is, the method proceeds to step S130. If the communication connection request from the first user is not received, the first vehicle may continue to detect whether a target vehicle exists within the preset range.

In step S130, the communication connection request is sent to the target vehicle.

In the present embodiment, when determining that the communication connection request is received from the first user, the first vehicle may send the received communication connection request to the target vehicle. The target vehicle may be a vehicle corresponding to an icon selected by the first user. As it is known from the above description, there may be a plurality of target vehicles within the preset range. The first user may select one of the plurality of vehicles as the target vehicle, and the communication connection request may be sent to the vehicle selected by the first user.

In step S140, it is determined whether a communication permission request sent by the target vehicle via the ultra-wideband communication system is received.

In some embodiments, after the communication connection request is sent to the target vehicle, it may be determined whether a communication permission request sent by the target vehicle via the ultra-wideband communication system is received within a preset time period. The preset time period may be a time period after the first vehicle sends the communication connection request to the target vehicle. The communication permission request sent via the ultra-wideband communication system may be information input by a target user corresponding to the target vehicle based on the communication connection request sent by the first vehicle. When the first vehicle receives the communication permission request sent by the target vehicle, a communication connection is established between the first vehicle and the target vehicle. At this time, audio communication or video communication can be performed between the first vehicle and the target vehicle.

As an alternative, if the first vehicle does not receive a communication permission request sent by the target vehicle within the preset time period, the communication connection request may be sent again and the number of times of sending the communication connection request may be counted in the present embodiment. When the number of times is greater than a preset number, sending of the communication connection request is stopped and meanwhile a message may be sent to the target vehicle.

As an alternative, if the first vehicle does not receive a communication permission request sent by the target vehicle within the preset time period, the type of the communication connection request may be changed in the present embodiment. In the present embodiment, the types of the communication connection request may include audio communication connection request, video communication connection request, etc. When it is determined that the first vehicle does not receive a communication permission request sent by the target vehicle within the preset time period, the type of the communication connection request may be changed, and determining whether a communication permission request sent by the target vehicle via the ultra-wideband communication system is received is continued. If a communication permission request sent by the target vehicle via the ultra-wideband communication system is still not received, sending of the communication connection request is stopped, and a message is sent to the target vehicle.

In step S150, a communication connection is established between the first vehicle and the target vehicle.

It should be noted that, when detecting whether a target vehicle exists within the preset range, the first vehicle may first detect whether the first vehicle is equipped with an ultra-wideband communication system. If it is determined that the first vehicle is equipped with an ultra-wideband communication system, the first vehicle determines whether a target vehicle exists within the preset range. If it is determined that the first vehicle is not equipped with an ultra-wideband communication system, it may be determined whether there is a first electronic device bound to the first vehicle. If there is a first electronic device bound to the first vehicle, it is determined whether the first electronic device is integrated with an ultra-wideband communication system. If the first electronic device is integrated with an ultra-wideband communication system, the first electronic device may be used to determine whether a target vehicle exists within the preset range.

In addition, the target vehicle may or may not be equipped with an ultra-wideband communication system. If the target vehicle is not equipped with an ultra-wideband communication system, it may be determined whether a target electronic device connected to the target vehicle is integrated with an ultra-wideband communication system. If it is determined that the target electronic device is integrated with an ultra-wideband communication system, the first vehicle may establish a communication connection with the target user in the target vehicle via the target electronic device, to thus realize communication connection. Further, when it is determined that the vehicle is not equipped with an ultra-wideband communication system, communication content of the ultra-wideband communication system may be directly displayed on a screen of the electronic device, or the electronic device may also be connected, via Bluetooth thereof, to a central control display of the vehicle, and the communication content may be displayed on the central control display.

The vehicle communication method provided by the present embodiment can communicate, in a simple and effective manner, with an ultra-wideband communication system of a vehicle within a preset range. Specifically, it is detected whether a target vehicle equipped with an ultra-wideband communication system exists within a preset range, and if a target vehicle exists, it is determined whether a communication connection request from a first user to a first vehicle is received, the first user being in the first vehicle. If the communication connection request is received, the communication connection request is sent to the target vehicle. When a communication permission request sent by the target vehicle is received, a communication connection between the first vehicle and the target vehicle is established. In the present disclosure, when it is determined that target vehicles each equipped with an ultra-wideband communication system exist within the preset range, communication connections may be established with different target vehicles depending on user's needs. The establishment of communication connections is simple and effective and can realize point-to-point communication with vehicles.

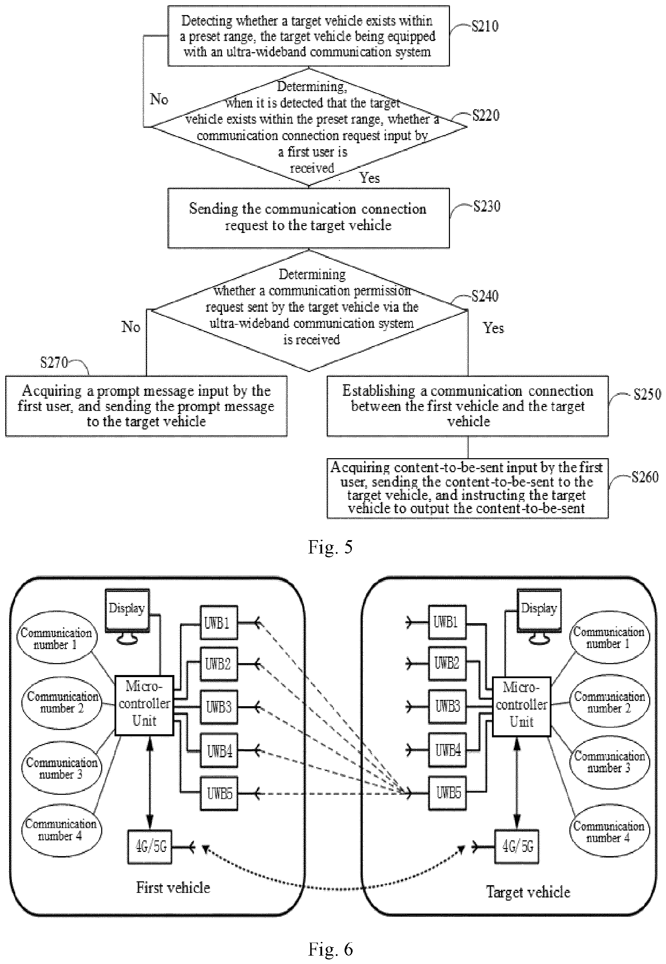

As shown in Fig. 5, an embodiment of the present disclosure provides a vehicle communication method. The communication method may include steps S210 to S270.

In step S210, it is detected whether a target vehicle exists within a preset range, the target vehicle being equipped with an ultra-wideband communication system.

In step S220, when it is detected that a target vehicle exists within the preset range, it is determined whether a communication connection request is received from a first user.

In some embodiments, when it is detected that a target vehicle exists within the preset range, the target vehicle may be displayed on a central control display of the first vehicle, during which process, the first vehicle may continuously send a positioning request, so that the position of the target vehicle and the distance between the first vehicle and the target vehicle can be constantly updated. In other words, the distance between the first vehicle and the target vehicle and the speed of the target vehicle dynamically change, which ensures accuracy of real-time position of the target vehicle and real-time distance between the first vehicle and the target vehicle.

In step S230, the communication connection request is sent to the target vehicle.

In step S240, it is determined whether a communication permission request sent by the target vehicle via the ultra-wideband communication system is received.

In some embodiments, if it is determined that a communication permission request sent by the target vehicle via the ultra-wideband communication system is received, a communication connection is established between the first vehicle and the target vehicle. That is, the method proceeds to step S250. Further, if a communication connection permission request sent by the target vehicle via the ultra-wideband communication system is not received, a prompt message input by the first user may be acquired and sent to the target vehicle in the present embodiment. That is, the method proceeds to step S270.

In step S250, a communication connection is established between the first vehicle and the target vehicle.

In the present embodiment, after the communication connection is established between the first vehicle and the target vehicle, the first vehicle may acquire content input by the first user, send the content to the target vehicle, and instruct the target vehicle to output the content. That is, the method proceeds to step S260.

In step S260, content input by the first user is acquired; the content is sent to the target vehicle; and the target vehicle is instructed to output the content.

As an alternative, after the communication connection is established between the first vehicle and the target vehicle, the first vehicle may detect whether the first user has input content for the target vehicle. The content may include a communication message. The communication message may include a normal communication message between the first user and the target user, or may include a prompt message of the first user to the target user. For example, if the first user in the first vehicle finds that the target vehicle is emitting smoke, the first user may send a communication connection request to the target user in the target vehicle, and after the target user accepts the communication connection request, the first user may directly tell the target user through audio or video that the target vehicle is on fire and that a check is needed.

The content also includes a communication means extension request. The communication means extension request is used to instruct the target vehicle to output a number acquisition message based on the communication means extension request, to acquire communication content input by the target user based on the number acquisition message, and to send the communication content to the first vehicle. As can be seen, the communication means extension request is mainly used to prompt the target user in the target vehicle to provide more communication means to the first user of the first vehicle, so as to facilitate the communication between the first user and the target user. In order to more clearly describe the sending of the communication means extension request and the acquisition of the communication content, the present embodiment provides a diagram as shown in Fig. 6. In Fig. 6, communication number 1, communication number 2, communication number 3, and communication number 4 may be communication numbers corresponding to different communication means. For example, communication number 1 may be a mobile phone number, communication number 2 may be an email address, communication number 3 may be a wechat ID, and communication number 4 may be a QQ ID.

In the present embodiment, the communication means extension request is sent to a central control display of the target vehicle via the ultra-wideband communication system. After the target user in the target vehicle agrees to share his/her communication number with the first user, the target vehicle may send the communication number selected by the target user to the first vehicle. If the target user in the target vehicle does not agree to send his/her communication number to the first user, then the first user can only communicate with the target user in the target vehicle through the ultra-wideband communication system. Once a range of communication between the two exceeds a preset communication range, the communication connection between the two vehicles becomes invalid.

On the contrary, if the target vehicle agrees to share the communication number with the first user, even if the range of communication between the first vehicle and the target vehicle exceeds the preset communication range, the first user and the target user are still capable of communication using the communication number sent by the target vehicle. Specifically, the first user may communicate with the target vehicle using a vehicle 4G/5G network, or may perform communication directly using a mobile network corresponding to electronic devices of the first user and the target user. In summary, the first user and the target user may first establish a connection via short-range communication of the ultra-wideband communication systems. After the mutual communication connection is established, the first user and the target user may extend the communication distance by using the communication number. In this way, vehicles can be used not only as a means of transportation, but also as a tool for making friends.

In step S270, a prompt message input by the first user is acquired and sent to the target vehicle.

In the present embodiment, if the communication permission request sent by the target vehicle is not received, the first vehicle may acquire the prompt message input by the first user, and send the prompt message to the target vehicle. The prompt message is mainly the first user's prompt to the target user, and may be a message sent by the first user to remind the target user of an unexpected situation in his/her vehicle. In addition, the prompt message may be sent to the target vehicle by way of leaving a message. After the message is sent to the target vehicle, the target vehicle may detect whether the target user views the prompt message within a preset time period. If the target user does not view the prompt message within the preset time period, the target vehicle may perform semantic recognition on the prompt message, and obtain a grade corresponding to the prompt message based on a semantic recognition result. When it is determined that the grade corresponding to the prompt message is the highest grade, the target vehicle may display the prompt message.

The highest grade may be a situation where the target vehicle is undergoing an unexpected situation. For example, when the content of the prompt message is "Let's be friends. I work in the construction industry", because semantic content corresponding to this prompt message is just ordinary chatting content, the grade corresponding to this prompt message may be a relatively low grade. For another example, when the content of the prompt message is "Smoke is coming out of your vehicle. Stop and check", because the semantic content corresponding to this prompt message relates to the safety of the vehicle, in which case the grade corresponding to this prompt message may be the highest grade and the target vehicle may display the prompt message directly on the central control display, making it convenient for the target user to be timely aware of the unexpected situation in the vehicle.

The vehicle communication method provided by the present embodiment can realize communication with an ultra-wideband communication system of a vehicle within a preset range in a simple and effective manner. Specifically, it is detected whether a target vehicle equipped with an ultra-wideband communication system exists within a preset range; if a target vehicle exists, it is determined whether a communication connection request from a first user to a first vehicle is received, the first user being in the first vehicle; if the communication connection request is received, the communication connection request is sent to the target vehicle; and when a communication permission request sent by the target vehicle is received, a communication connection between the first vehicle and the target vehicle is established. In the present disclosure, when it is determined that target vehicles each equipped with an ultra-wideband communication system exist within the preset range, communication connections can be established with different target vehicles based on the user's needs. The establishment of communication connections is simple and effective and can realize point-to-point communication with vehicles. Furthermore, in the present embodiment, a vehicle can be changed, using the communication means extension request, from an ordinary transportation tool into a communication tool for making friends, which increases to a certain extent opportunities for a user to make friends and reduces the possibility of accidents.

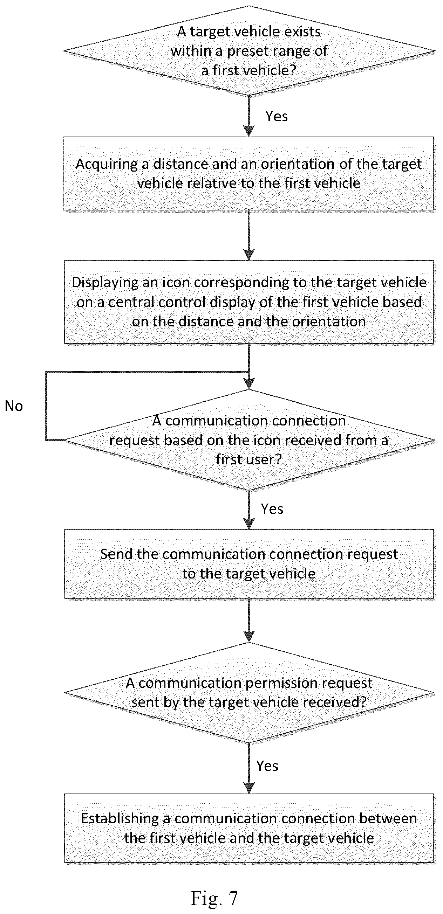

As shown in Fig. 7, another embodiment of the present disclosure provides a vehicle communication method. The vehicle communication method includes steps S310 to S370.

In step S310, it is detected whether a target vehicle exists within a preset range, the target vehicle being equipped with an ultra-wideband communication system.

In step S320, when it is detected that a target vehicle exists within the preset range, a distance and an orientation of the target vehicle relative to the first vehicle are acquired.

In some embodiments, the first vehicle is provided with at least three ultra-wideband antennas, and acquiring the distance and the orientation of the target vehicle relative to the first vehicle may include: acquiring distances between respective ones of the ultra-wideband antennas and the target vehicle, and determining the orientation of the target vehicle relative to the first vehicle based on the distances.

In the present embodiment, acquiring the distance between the first vehicle and the target vehicle may include: calculating distances between respective ones of the ultra-wideband antennas and the target vehicle using a two-way time-of-flight method. Specifically, each ultra-wideband communication system, from the time it is enabled, can generate an independent timestamp. The time when the first vehicle transmits a request pulse signal on its timestamp is a first time; the time when the target vehicle receives the request pulse signal may be a second time; the target vehicle sends a response signal in response to the request pulse signal at a third time; and the first vehicle receives the response signal at a fourth time. A flight time of the pulse signal between the first vehicle and the target vehicle can thus be calculated, and a flight distance can then be determined.

In addition, after the flight time of the signal between the vehicles is obtained, the flight distance may be calculated and obtained based on the flight time in the present embodiment. Specifically, the flight distance may be equal to the speed of light multiplied by a difference between a first time difference and a second time difference. The first time difference may be a difference between the fourth time and the first time, and the second time difference may be a difference between the third time and the second time.

In other embodiments, after acquiring the distances between respective ones of the ultra-wideband antennas and the target vehicle, these distances may be used in combinations to determine the orientation of the target vehicle relative to the first vehicle. For example, there are three ultra-wideband antennas on the first vehicle, the distance between the first ultra-wideband antenna and the target vehicle being 11 m, the distance between the second ultra-wideband antenna and the target vehicle being 13 m, and the distance between the third ultra-wideband antenna and the target vehicle being 15 m. In the present disclosure, with the first and second ultra-wideband antennas, it may be determined whether the target vehicle is in front of or behind the first vehicle; with the third ultra-wideband antenna, it may be determined whether the target vehicle is on the left or the right of the first vehicle. Finally, by calculating angles between respective ones of the three ultra-wideband antennas and the target vehicle, it can be determined that the target vehicle is at the front left of the first vehicle, in a direction that is at a 40-degree angle to the first vehicle.

In step S330, an icon corresponding to the target vehicle is displayed on a central control display of the first vehicle based on the distance and the orientation.

In step S340, it is determined whether a communication connection request based on the icon is received from the first user.

In some embodiments, if a communication connection request based on the icon is received from the first user, it is determined that a communication connection request is received from a first user, and then the communication connection request is sent to the target vehicle. That is, the method proceeds to step S350. If a communication connection request from the user is not received, it is continuously detected whether a communication connection request from the user is received. If a communication connection request from the user is still not received within the preset time period, a prompt message is output to prompt the user to input a communication connection request. If the user still does not input a communication connection request, display of the icon is cancelled, and the icon is redisplayed after a preset time period.

In step S350, the communication connection request is sent to the target vehicle.

In step S360, it is determined whether a communication permission request sent by the target vehicle via the ultra-wideband communication system is received.

In step S370, a communication connection is established between the first vehicle and the target vehicle.

In some embodiments, after the communication connection is established between the first vehicle and the target vehicle, multiple types of data such as text, audio, pictures, videos, files, and so on may be transmitted by taking advantage of the short-distance high-speed data transmission characteristics of the ultra-wideband communication system. For example, when the first user in the first vehicle is very interested in the music played in a nearby vehicle, the first user may send a communication connection request to the nearby vehicle. After a communication connection is established, the first user may send a request for sharing himself/herself the music to a target user in the target vehicle. When the target user agrees to share the music, the target user may share the music file to the first user by taking advantage of the high-speed data transmission characteristics of the ultra-wideband communication system. The first vehicle may play the music after receiving the music file.

The vehicle communication method provided by the present embodiment can realize communication with an ultra-wideband communication system of a vehicle within a preset range in a simple and effective manner. Specifically, it is detected whether a target vehicle equipped with an ultra-wideband communication system exists within a preset range, and if a target vehicle exists, it is determined whether a communication connection request from a first user to a first vehicle is received, the first user being in the first vehicle; if the communication connection request is received, the communication connection request is sent to the target vehicle; and when a communication permission request sent by the target vehicle is received, a communication connection is established between the first vehicle and the target vehicle. In the present disclosure, when it is determined that target vehicles each equipped with an ultra-wideband communication system exist within the preset range, communication connections can be established with different target vehicles based on the user's needs. The establishment of communication connections is simple and effective and can realize point-to-point communication with vehicles. Furthermore, in the present embodiment, a communication connection between the first vehicle and the target vehicle can be established by means of the point-to-point communication function, which can to some certain extent reduce the occurrence of traffic accidents.

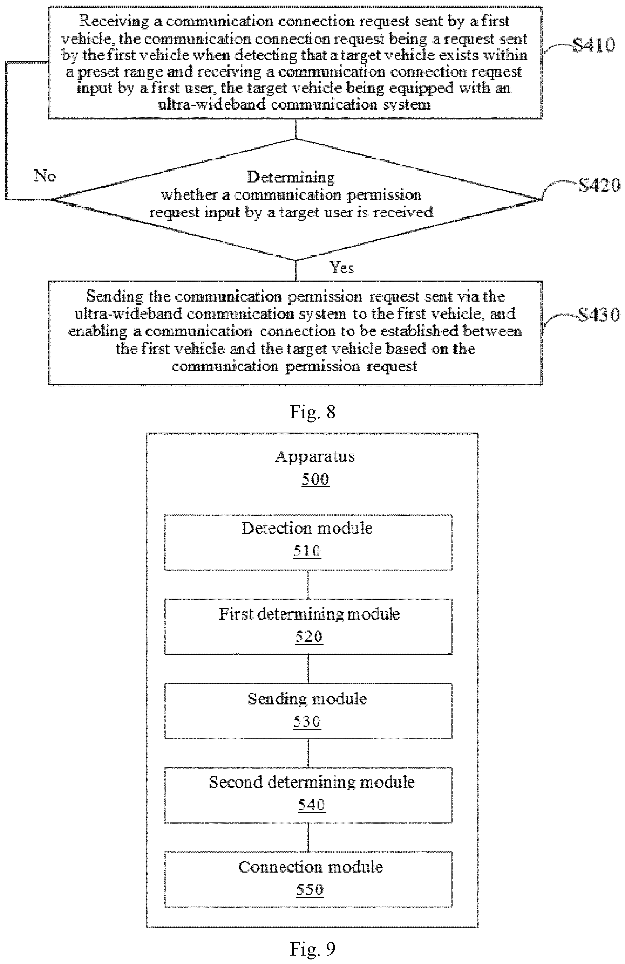

As shown in Fig. 8, an embodiment of the present disclosure provides a vehicle communication method. The vehicle communication method includes step S410 to S430.

In step S410, a communication connection request sent by a first vehicle is received. The communication connection request is a request sent by the first vehicle when detecting that a target vehicle exists within a preset range and receiving a communication connection request from a first user. The target vehicle is equipped with an ultra-wideband communication system.

In step S420, it is determined whether a communication permission request is received from a target user.

In step S430, if a communication permission request is received from a target user, the communication permission request is sent via the ultra-wideband communication system to the first vehicle, and a communication connection is established between the first vehicle and the target vehicle based on the communication permission request.

As shown in Fig. 9, an embodiment of the present disclosure provides a vehicle communication apparatus 500. The vehicle communication apparatus 500 includes a detection module 510, a first determining module 520, a sending module 530, a second determining module 540, and a connection module 550.

The detection module 510 is configured to detect whether a target vehicle exists within a preset range, the target vehicle being equipped with an ultra-wideband communication system.

The first determining module 520 is configured to determine, when it is detected that a target vehicle exists within the preset range, whether a communication connection request is received from a first user, the first user being in a first vehicle.

Further, the first determining module 520 is also configured to: acquire, when it is detected that a target vehicle exists within the preset range, a distance and an orientation of the target vehicle relative to the first vehicle; display an icon corresponding to the target vehicle on a central control display of the first vehicle based on the distance and the orientation; determine whether a communication connection request based on the icon is received from the first user; and determine, if the communication connection request based on the icon is received from the first user, that the communication connection request is received from the first user.

Further, the first determining module 520 is also configured to acquire distances between respective ones of ultra-wideband antennas and the target vehicle, and determine the orientation of the target vehicle relative to the first vehicle based on the distances. Furthermore, acquiring distances between respective ones of ultra-wideband antennas and the target vehicle includes: calculating distances between respective ones of the ultra-wideband antenna and the target vehicle using a two-way time-of-flight method.

The sending module 530 is configured to send the communication connection request to the target vehicle if the communication connection request is received from the first user.

The second determining module 540 is configured to determine whether a communication permission request sent by the target vehicle via the ultra-wideband communication system is received.

The connection module 550 is configured to establish a communication connection between the first vehicle and the target vehicle if the communication permission request sent by the target vehicle is received.

Further, the vehicle communication apparatus 500 is also configured to obtain content input by the first user, send the content to the target vehicle, and instruct the target vehicle to output the content. The content includes a communication means extension request. The communication means extension request is used to instruct the target vehicle to output a number acquisition message based on the communication means extension request, to acquire communication content input by the target user based on the number acquisition message, and to send the communication content to the first vehicle.

Further, the vehicle communication apparatus 500 is also configured to acquire a prompt message input by the first user if the communication permission request sent by the target vehicle is not received, and send the prompt message to the target vehicle.

The vehicle communication apparatus provided in the present embodiment can realize communication with an ultra-wideband communication system of a vehicle within a preset range in a simple and effective manner. Specifically, it is detected whether a target vehicle equipped with an ultra-wideband communication system exists within a preset range; if a target vehicle exists, it is determined whether a communication connection request from a first user to a first vehicle is received, the first user being in the first vehicle; if the communication connection request is received, the communication connection request is sent to the target vehicle; and a the communication permission request sent by the target vehicle is received, a communication connection is established between the first vehicle and the target vehicle. In the present disclosure, when it is determined that target vehicles each equipped with an ultra-wideband communication system exist within the preset range, communication connections can be established with different target vehicles based on the user's needs. The establishment of communication connections is simple and effective and can realize point-to-point communication with vehicles.

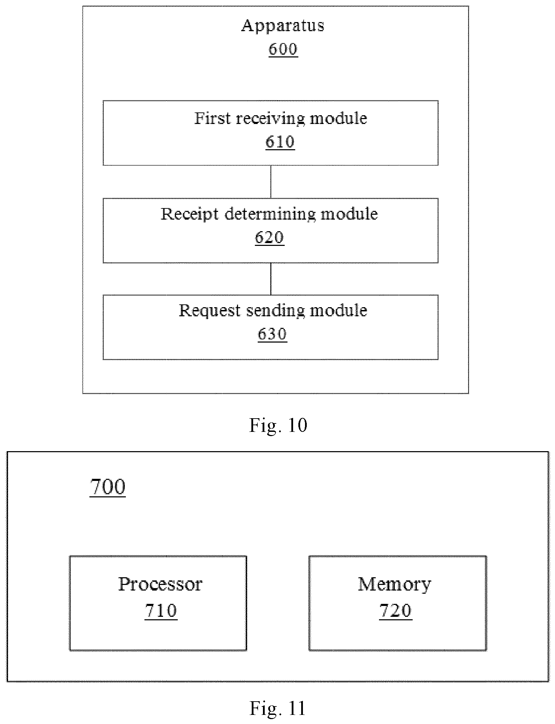

As shown in Fig. 10, an embodiment of the present disclosure provides a vehicle communication apparatus 600. The vehicle communication apparatus 600 includes a first receiving module 610, a receipt determining module 620, and a request sending module 630.

The first receiving module 610 is configured to receive a communication connection request sent by a first vehicle. The communication connection request is a request sent by the first vehicle when detecting that a target vehicle exists within a preset range and receiving a communication connection request from a first user. The target vehicle is equipped with an ultra-wideband communication system.

The receipt determining module 620 is configured to determine whether a communication permission request is received from a target user.

The request sending module 630 is configured to send the communication permission request via the ultra-wideband communication system to the first vehicle and cause a communication connection to be established between the first vehicle and the target vehicle based on the communication permission request, if the communication permission request is received from the target user.

As shown in Fig. 11, an embodiment of the present disclosure provides a communication controller 700. The communication controller 700 includes a processor 710 and a memory 720. The memory 720 has stored thereon a computer program instruction which, when invoked by the processor 710, implements the above-mentioned vehicle communication method.

The processor 710 may include one or more processing cores. The processor 710 is connected to various parts of the entire communication controller via various interfaces and lines, and executes various functions of the communication controller and processes data by running or executing instructions, programs, code sets or instruction sets stored on the memory 720 and calling data stored on the memory 720. Alternatively, the processor 710 may be implemented in at least one of following hardware forms: digital signal processing (DSP), field programmable gate array (FPGA), and programmable logic array (PLA). The processor 710 may be integrated with one or a combination of a central processing unit (CPU) 710, a graphics processor (GPU) 710, a modem, and the like. Among them, the CPU mainly deals with an operating system, user interfaces, and applications; the GPU is responsible for rendering and drawing of content to be displayed; and the modem is used to deal with wireless communication. It may be appreciated that the above-mentioned modem may not be integrated into the processor 710, but may be implemented separately by a communication chip.

The memory 720 may include a random access memory (RAM) 720, or may include a read-only memory (ROM) 720. The memory 720 may be used to store instructions, programs, codes, code sets, or instruction sets. The memory 720 may include a program storage area and a data storage area. The program storage area may store instructions for implementing an operating system, instructions for implementing at least one function, instructions for implementing each of the foregoing method embodiments, and the like. The data storage area may also store data created by the communication controller during use.

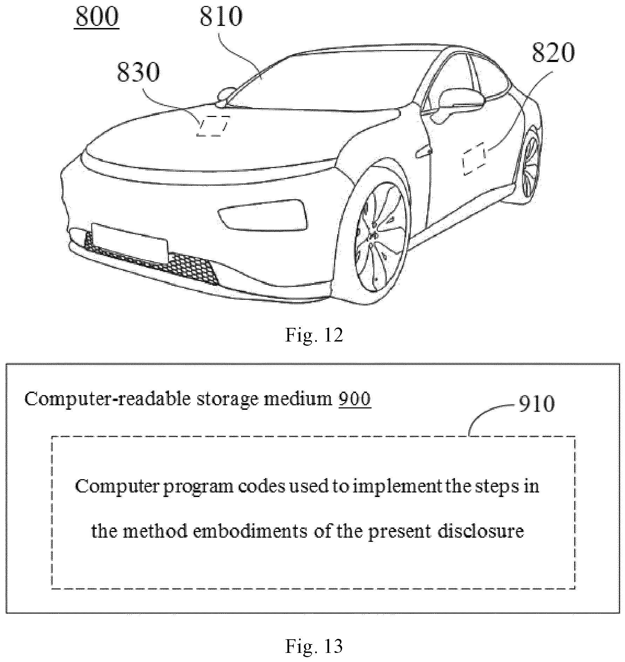

As shown in Fig. 12, an embodiment of the present disclosure also provides a vehicle 800. The vehicle 800 includes a vehicle body 810, a communication controller 820, and a central control display 830. The communication controller 820 and the central control display 830 are arranged in the vehicle body 810. The communication controller 820 is connected with the central control display 830.

As shown in Fig. 13, an embodiment of the present disclosure provides a computer-readable storage medium 900. The computer-readable storage medium 900 stores a computer program instruction 910. The computer program instruction 910 may be invoked by a processor to implement the method of the foregoing embodiments.

The computer-readable storage medium may be an electronic memory such as a flash memory, an EEPROM (Electrically Erasable Programmable Read Only Memory), an EPROM, a hard disk, or an ROM. Alternatively, the computer-readable storage medium includes a non-transitory computer-readable storage medium. The computer-readable storage medium 900 has a storage space for executing program codes of any method steps in the above methods. These program codes may be read from or written into one or more computer program products. The program codes may be compressed in a suitable form, for example.

## Claims

1. A vehicle communication method carried out by a first vehicle (11), the method comprising:
detecting (S110, S210) whether a target vehicle (12) exists within a preset range, the target vehicle being equipped with an ultra-wideband communication system;
determining (S120, S220), when it is detected that the target vehicle exists within the preset range, whether a communication connection request is received from a first user, the first user being in the first vehicle;
sending (S130, S230) the communication connection request to the target vehicle if the communication connection request is received from the first user;
determining (S140, S240) whether a communication permission request sent by the target vehicle via the ultra-wideband communication system is received;
establishing (S150, S250) a communication connection between the first vehicle and the target vehicle if the communication permission request sent by the target vehicle is received; acquiring (S260) content input by the first user, sending the content to the target vehicle, and instructing the target vehicle to output the content,
wherein
the content comprises a communication means extension request to instruct the target vehicle to indicate a communication number, wherein different communication numbers correspond to different communication means other than the ultra-wideband communication system; and
establishing, using the communication number, another communication connection between the first vehicle and the target vehicle for communicating at a distance that exceeds the preset range.

2. The method according to claim 1, further comprising:
acquiring (S270) a prompt message input by the first user and sending the prompt message to the target vehicle, if the communication permission request sent by the target vehicle is not received.

3. The method according to claim 2, further comprising:
detecting whether the prompt message is viewed by a target user of the target vehicle within a preset time period;
performing semantic recognition of the prompt message to obtain a semantic recognition result if the prompt message is not viewed by the target user within the preset time period;
determining an urgency grade of the prompt message based on the semantic recognition result; and
performing a corresponding action based on the urgency grade of the prompt message.

4. The method according to claim 1, wherein said determining, when it is detected that the target vehicle exists within the preset range, whether a communication connection request is received from a first user comprises:
acquiring a distance and an orientation of the target vehicle relative to the first vehicle when it is detected that the target vehicle exists within the preset range;
displaying an icon corresponding to the target vehicle on a central control display of the first vehicle based on the distance and the orientation; and
determining whether a communication connection request based on the icon is received from the first user.

5. The method according to claim 4, wherein the first vehicle is provided with at least three ultra-wideband antennas, and said acquiring a distance and an orientation of the target vehicle relative to the first vehicle comprises:
acquiring distances between respective ones of the ultra-wideband antennas and the target vehicle; and
determining the orientation of the target vehicle relative to the first vehicle based on the distances.

6. The method according to claim 5, wherein said acquiring distances between respective ones of the ultra-wideband antennas and the target vehicle comprises:
calculating the distances between respective ones of the ultra-wideband antennas and the target vehicle using a two-way time-of-flight method.

7. A vehicle communication method by a target vehicle, comprising:
receiving (S410) a communication connection request sent by a first vehicle (11), wherein the communication connection request is sent by the first vehicle when detecting that a target vehicle (12) exists within a preset range and receiving a communication connection request from a first user, the target vehicle being equipped with an ultra-wideband communication system;
determining (S420) whether a communication permission request is received from a target user;
if the communication permission request is received from the target user, sending (S430) the communication permission request via the ultra-wideband communication system to the first vehicle, and causing a communication connection to be established between the first vehicle and the target vehicle based on the communication permission request;
receiving content from the first vehicle, wherein the content comprises a communication means extension request, the communication means extension request used for to instructing the target vehicle to indicate a communication number, wherein different communication numbers correspond to different communication means other than the ultra-wideband communication system; and
causing another communication connection to be established, using the communication number, for communicating between the first vehicle and the target vehicle at a distance that exceeds the preset range.

8. A vehicle communication apparatus (500) comprising means for carrying out the method of any one of claims 1-6.

9. A vehicle communication apparatus (600) comprising means for carrying out the method of claim 7.

10. A vehicle (800) comprising a vehicle body and a communication controller provided in the vehicle body, wherein the communication controller comprises means for carrying out the method of any one of claims 1 to 6.

11. A computer-readable storage medium (900) comprising program code stored thereon which, when executed by a communication controller provided in a vehicle body, causes the communication controller to carry out the method of any one of claims 1 to 6.

## Patentansprüche

1. Fahrzeugkommunikationsverfahren, das von einem ersten Fahrzeug (11) ausgeführt wird, wobei das Verfahren Folgendes beinhaltet:
Erkennen (S110, S210), ob ein Zielfahrzeug (12) innerhalb eines voreingestellten Bereichs existiert, wobei das Zielfahrzeug mit einem Ultrabreitband-Kommunikationssystem ausgestattet ist;
Feststellen (S120, S220), wenn erkannt wird, dass das Zielfahrzeug innerhalb des voreingestellten Bereichs existiert, ob eine Kommunikationsverbindungsanforderung von einem ersten Benutzer empfangen wird, wobei sich der erste Benutzer im ersten Fahrzeug befindet;
Senden (S130, S230) der Kommunikationsverbindungsanforderung zu dem Zielfahrzeug, wenn die Kommunikationsverbindungsanforderung vom ersten Benutzer empfangen wird;
Feststellen (S140, S240), ob eine vom Zielfahrzeug über das Ultrabreitband-Kommunikationssystem gesendete Kommunikationserlaubnisanforderung empfangen wird;
Herstellen (S150, S250) einer Kommunikationsverbindung zwischen dem ersten Fahrzeug und dem Zielfahrzeug, wenn die vom Zielfahrzeug gesendete Kommunikationserlaubnisanforderung empfangen wird;
Erfassen (S260) von vom ersten Benutzer eingegebenem Inhalt, Senden des Inhalts zum Zielfahrzeug und Anweisen des Zielfahrzeugs, den Inhalt auszugeben, wobei der Inhalt eine Kommunikationsmittelerweiterungsanforderung umfasst, um das Zielfahrzeug anzuweisen, eine Kommunikationsnummer anzugeben, wobei verschiedene Kommunikationsnummern verschiedenen Kommunikationsmitteln entsprechen, die nicht das Ultrabreitband-Kommunikationssystem sind; und
Herstellen, unter Verwendung der Kommunikationsnummer, einer weiteren Kommunikationsverbindung zwischen dem ersten Fahrzeug und dem Zielfahrzeug zum Kommunizieren in einem Abstand, der den voreingestellten Bereich überschreitet.

2. Verfahren nach Anspruch 1, das ferner Folgendes beinhaltet:
Erfassen (S270) einer vom ersten Benutzer eingegebenen Aufforderungsnachricht und Senden der Aufforderungsnachricht zum Zielfahrzeug, wenn die vom Zielfahrzeug gesendete Kommunikationserlaubnisanforderung nicht empfangen wird.

3. Verfahren nach Anspruch 2, das ferner Folgendes beinhaltet:
Erkennen, ob die Aufforderungsnachricht von einem Zielbenutzer des Zielfahrzeugs innerhalb einer vorgegebenen Zeitspanne angesehen wird;
Durchführen einer semantischen Erkennung der Aufforderungsnachricht, um ein semantisches Erkennungsergebnis zu erhalten, wenn die Aufforderungsnachricht vom Zielbenutzer nicht innerhalb der voreingestellten Zeitspanne angesehen wird;
Bestimmen eines Dringlichkeitsgrades der Aufforderungsnachricht auf der Basis des semantischen Erkennungsergebnisses; und
Ausführen einer entsprechenden Aktion auf der Basis des Dringlichkeitsgrades der Aufforderungsnachricht.

4. Verfahren nach Anspruch 1, wobei das genannte Feststellen, wenn erkannt wird, dass das Zielfahrzeug innerhalb des voreingestellten Bereichs existiert, ob eine Kommunikationsverbindungsanforderung von einem ersten Benutzer empfangen wird, Folgendes beinhaltet:
Erfassen eines Abstands und einer Orientierung des Zielfahrzeugs relativ zum ersten Fahrzeug, wenn erkannt wird, dass das Zielfahrzeug innerhalb des voreingestellten Bereichs existiert;
Anzeigen eines dem Zielfahrzeug entsprechenden Symbols auf einem zentralen Steuerdisplay des ersten Fahrzeugs auf der Basis des Abstands und der Orientierung; und
Feststellen, ob eine auf dem Symbol basierende Kommunikationsverbindungsanforderung vom ersten Benutzer empfangen wird.

5. Verfahren nach Anspruch 4, wobei das erste Fahrzeug mit mindestens drei Ultrabreitbandantennen ausgestattet ist und das genannte Erfassen eines Abstands und einer Orientierung des Zielfahrzeugs relativ zum ersten Fahrzeug Folgendes beinhaltet:
Erfassen von Abständen zwischen jeweiligen der Ultrabreitbandantennen und dem Zielfahrzeug; und
Bestimmen der Orientierung des Zielfahrzeugs relativ zum ersten Fahrzeug auf der Basis der Abstände.

6. Verfahren nach Anspruch 5, wobei das genannte Erfassen von Abständen zwischen jeweiligen der Ultrabreitbandantennen und dem Zielfahrzeug Folgendes beinhaltet:
Berechnen der Abstände zwischen jeweiligen der Ultrabreitbandantennen und dem Zielfahrzeug mit einem Zweiweg-Flugzeitverfahren.

7. Fahrzeugkommunikationsverfahren durch ein Zielfahrzeug, das Folgendes beinhaltet:
Empfangen (S410) einer von einem ersten Fahrzeug (11) gesendeten Kommunikationsverbindungsanforderung, wobei die Kommunikationsverbindungsanforderung vom ersten Fahrzeug gesendet wird, wenn erkannt wird, dass ein Zielfahrzeug (12) innerhalb eines voreingestellten Bereichs existiert, und Empfangen einer Kommunikationsverbindungsanforderung von einem ersten Benutzer, wobei das Zielfahrzeug mit einem Ultrabreitband-Kommunikationssystem ausgestattet ist;
Feststellen (S420), ob eine Kommunikationserlaubnisanforderung von einem Zielbenutzer empfangen wird;
Senden (S430), wenn die Kommunikationserlaubnisanforderung vom Zielbenutzer empfangen wird, der Kommunikationserlaubnisanforderung über das Ultrabreitband-Kommunikationssystem zum ersten Fahrzeug, und Veranlassen der Herstellung einer Kommunikationsverbindung zwischen dem ersten Fahrzeug und dem Zielfahrzeug auf der Basis der Kommunikationserlaubnisanforderung;
Empfangen von Inhalt vom ersten Fahrzeug, wobei der Inhalt eine Kommunikationsmittelerweiterungsanforderung umfasst, wobei die Kommunikationsmittelerweiterungsanforderung verwendet wird zum Anweisen des Zielfahrzeugs, eine Kommunikationsnummer anzugeben, wobei verschiedene Kommunikationsnummern verschiedenen Kommunikationsmitteln entsprechen, die nicht das Ultrabreitband-Kommunikationssystem sind; und
Veranlassen der Herstellung einer weiteren Kommunikationsverbindung unter Verwendung der Kommunikationsnummer für die Kommunikation zwischen dem ersten Fahrzeug und dem Zielfahrzeug in einem Abstand, der den voreingestellten Bereich überschreitet.

8. Fahrzeugkommunikationsvorrichtung (500) mit Mitteln zum Durchführen des Verfahrens nach einem der Ansprüche 1-6.

9. Fahrzeugkommunikationsvorrichtung (600) mit Mitteln zum Durchführen des Verfahrens nach Anspruch 7.

10. Fahrzeug (800) mit einer Fahrzeugkarosserie und einer in der Fahrzeugkarosserie vorgesehenen Kommunikationssteuerung, wobei die Kommunikationssteuerung Mittel zur Durchführung des Verfahrens nach einem der Ansprüche 1 bis 6 umfasst.

11. Computerlesbares Speichermedium (900) mit darauf gespeichertem Programmcode, der bei Ausführung durch eine in einer Fahrzeugkarosserie vorgesehene Kommunikationssteuerung bewirkt, dass die Kommunikationssteuerung das Verfahren nach einem der Ansprüche 1 bis 6 durchführt.

## Revendications

1. Procédé de communication de véhicule réalisé par un premier véhicule (11), le procédé comprenant :
une détection (S110, S210) du fait qu'un véhicule cible (12) existe ou non au sein d'une portée prédéfinie, le véhicule cible étant équipé d'un système de communication à bande ultra-large ;
une détermination (S120, S220), lorsqu'il est détecté que le véhicule cible existe au sein de la portée prédéfinie, du fait qu'une demande de connexion de communication est reçue ou non à partir d'un premier utilisateur, le premier utilisateur étant dans le premier véhicule ;
un envoi (S130, S230) de la demande de connexion de communication vers le véhicule cible si la demande de connexion de communication est reçue à partir du premier utilisateur ;
une détermination (S140, S240) du fait qu'une demande d'autorisation de communication envoyée par le véhicule cible par l'intermédiaire du système de communication à bande ultra-large est reçue ou non ;
un établissement (S150, S250) d'une connexion de communication entre le premier véhicule et le véhicule cible si la demande d'autorisation de communication envoyée par le véhicule cible est reçue,
une acquisition (S260) d'une entrée de contenu par le premier utilisateur, un envoi du contenu vers le véhicule cible, et le fait d'ordonner au véhicule cible de délivrer le contenu,
dans lequel
le contenu comprend une demande d'extension de moyen de communication pour ordonner au véhicule cible d'indiquer un numéro de communication, dans lequel des numéros de communication différents correspondent à des moyens de communication différents autres que le système de communication à bande ultra-large ; et
un établissement, à l'aide du numéro de communication, d'une autre connexion de communication entre le premier véhicule et le véhicule cible pour une communication à une distance qui dépasse la portée prédéfinie.

2. Procédé selon la revendication 1, comprenant en outre :
une acquisition (S270) d'un message d'invite entré par le premier utilisateur et un envoi du message d'invite au véhicule cible, si la demande d'autorisation de communication envoyée par le véhicule cible n'est pas reçue.

3. Procédé selon la revendication 2, comprenant en outre :
une détection du fait que le message d'invite est visualisé par un utilisateur cible du véhicule cible dans une période de temps prédéfinie ;
une réalisation d'une reconnaissance sémantique du message d'invite pour obtenir un résultat de reconnaissance sémantique si le message d'invite n'est pas visualisé par l'utilisateur cible dans la période de temps prédéfinie ;
une détermination d'un niveau d'urgence du message d'invite sur la base du résultat de reconnaissance sémantique ; et
une réalisation d'une action correspondante sur la base du niveau d'urgence du message d'invite.

4. Procédé selon la revendication 1, dans lequel ladite détermination, lorsque l'existence du véhicule cible au sein de la portée prédéfinie est détectée, du fait qu'une demande de connexion de communication est reçue ou non à partir d'un premier utilisateur comprend :
une acquisition d'une distance et d'une orientation du véhicule cible par rapport au premier véhicule lorsque l'existence du véhicule cible au sein de la portée prédéfinie est détectée ;
un affichage d'une icône correspondant au véhicule cible sur un affichage de commande central du premier véhicule sur la base de la distance et de l'orientation ; et
une détermination du fait qu'une demande de connexion de communication basée sur l'icône est reçue ou non en provenance du premier utilisateur.

5. Procédé selon la revendication 4, dans lequel le premier véhicule est doté d'au moins trois antennes à bande ultra-large, et ladite acquisition d'une distance et d'une orientation du véhicule cible par rapport au premier véhicule comprend :
une acquisition de distances entre des antennes respectives des antennes à bande ultra-large et le véhicule cible ; et
une détermination de l'orientation du véhicule cible par rapport au premier véhicule sur la base des distances.

6. Procédé selon la revendication 5, dans lequel ladite acquisition de distances entre des antennes respectives des antennes à bande ultra-large et le véhicule cible comprend :
un calcul des distances entre des antennes respectives des antennes à bande ultra-large et le véhicule cible à l'aide d'un procédé de temps de vol bidirectionnel.

7. Procédé de communication de véhicule par un véhicule cible, comprenant :
une réception (S410) d'une demande de connexion de communication envoyée par un premier véhicule (11), dans lequel la demande de connexion de communication est envoyée par le premier véhicule lors d'une détection du fait qu'un véhicule cible (12) existe au sein d'une portée prédéfinie et une réception d'une demande de connexion de communication en provenance d'un premier utilisateur, le véhicule cible étant équipé d'un système de communication à bande ultra-large ;
une détermination (S420) du fait qu'une demande d'autorisation de communication est reçue ou non en provenance d'un utilisateur cible ;
si la demande d'autorisation de communication est reçue en provenance de l'utilisateur cible, un envoi (S430) de la demande d'autorisation de communication par l'intermédiaire du système de communication à bande ultra-large vers le premier véhicule, et une provocation d'un établissement d'une connexion de communication entre le premier véhicule et le véhicule cible sur la base de la demande d'autorisation de communication ;
une réception de contenu à partir du premier véhicule, dans lequel le contenu comprend une demande d'extension de moyen de communication, la demande d'extension de moyen de communication étant utilisée pour ordonner au véhicule cible d'indiquer un numéro de communication dans lequel des numéros de communication différents correspondent à des moyens de communication différents autres que le système de communication à bande ultra-large ; et
une provocation d'un établissement d'une autre connexion de communication, à l'aide du numéro de communication, pour une communication entre le premier véhicule et le véhicule cible à une distance qui dépasse la portée prédéfinie.

8. Appareil de communication de véhicule (500) comprenant un moyen de réalisation du procédé selon l'une quelconque des revendications 1 à 6.

9. Appareil de communication de véhicule (600) comprenant un moyen de réalisation du procédé selon la revendication 7.

10. Véhicule (800) comprenant un corps de véhicule et un dispositif de commande de communication fourni dans le corps de véhicule, dans lequel le dispositif de commande de communication comprend un moyen de réalisation du procédé selon l'une quelconque des revendications 1 à 6.

11. Support de stockage lisible par ordinateur (900) comprenant un code de programme stocké dessus qui, lorsqu'il est exécuté par un dispositif de commande de communication fourni dans un corps de véhicule, amène le dispositif de commande de communication à réaliser le procédé selon l'une quelconque des revendications 1 à 6.
